# EUROPEAN PATENT APPLICATION

(11) **EP 1 792 756 A2**
(43) Date of publication of application: **06.06.2007**
(21) Application number: 06125314.2
(22) Date of filing: 04.12.2006
(51) Int. Cl.: B60C 15/06

(54) **Pneumatic tire with an asymmetrical bead reinforcing ply**

(30) Priority: 05.12.2005 US 293933
(71) Applicant: THE GOODYEAR TIRE & RUBBER COMPANY, Akron OH 44316-0001 (US)
(72) Inventor: Poling, David Charles, Uniontown, OH 44685 (US); Westgate, Walter Kevin, Uniontown, OH 44685 (US); Puhala, Aaron Scott, Kent, OH 44240 (US); Marazzi, Eric John, Tallmadge, OH 44278 (US); Weber, Michael Joseph, Akron, OH 44312 (US); Gschnell, Cristina Marie, Canal Fulton, OH 44614 (US); Morrison, Andrew Edward, Akron, OH 44312 (US); Schmalix, Charles Kenneth, Canal Fulton, OH 44614 (US); Barnette, Rachel Rebekah, Akron, OH 44313 (US); Sandstrom, Paul Harry, Cuyahoga Falls, OH 44223 (US)
(74) Representative: Kutsch, Bernd

(57) **Abstract**

A pneumatic radial tire has a carcass and a tread. The carcass has at least one carcass reinforcing ply (12) and opposing bead portions (14). Each bead portion (14) has a bead core (22) and a bead apex (24) radially. The apexes in each bead portion preferably have the same radial height (HA), as measured from a bead base line (B). The tire has a bead reinforcing ply (26) preferaby comprising carbon fiber reinforcing cords located in only one bead portion of the tire, with the bead reinforcing ply being adjacent to the carcass reinforcing ply (12).

## Description

### Field of the Invention

The present invention is directed towards a pneumatic tire. More specifically, the present invention is directed towards a pneumatic tire with asymmetrical reinforcement in the lower sidewalls and bead regions of the tire to enhance high performance aspects of the tire.

### Background of the Invention

Pneumatic tires are conventionally constructed to have a symmetrical internal construction; the symmetric being centered on the lateral center, or equatorial plane, of the tire. Laboratory studies have shown that a majority of a tire's net cornering force is generated in the area of the shoulder on the inside of the direction of turn. Roll and lateral deflection to the outside tend to lift this inside shoulder, reducing the tire's cornering capability. In many vehicles, the vehicle's suspension system compensates for the reduced cornering capability by cambering of the vehicle wheels. In cambering, the top of a wheel and tire are tilted toward the center of the radius of the turn for maximum cornering force. Through the use of high wheel camber and toe angles, car suspensions are often designed in such a way that the load carried by a tire is not equally distributed between the inner and outer side of the tire. Given the fact that both sides of a tire are generally equal, this causes an asymmetric loading of the footprint leading to a side-to-side non-uniform shape that can be detrimental to the tire performance.

### Summary of the Invention

The present invention is directed to a tire designed to compensate for wheel cambering and yield improved tire performance.

Disclosed herein is a pneumatic radial tire having two circumferential tire halves, with the tire comprising a carcass and a tread radially outward of the carcass. The carcass has at least one carcass reinforcing ply, opposing bead portions, and opposing sidewalls. The carcass reinforcing ply has a main portion extending between the opposing bead portions and a pair of turnup portions with each turnup portion extending from one end of the main portion. Each bead portion in the carcass has a bead core and a bead apex radially outward of each bead core with the apex located between the main portion and one turnup portion of the at least one reinforcing ply. In the tire of the invention, the apexes in each bead portion have the same radial height (HA), as measured from a bead base line (B). The tire has a bead reinforcing ply comprising carbon fiber reinforcing cords located in only one bead portion of the tire wherein the bead reinforcing ply is adjacent to the at least one carcass reinforcing ply.

In one aspect of the invention, the carbon fiber cords of the bead reinforcing ply have a denier in the range of 667 dTex to 16,000 dTex. The cords are inclined at an angle in the range of 30° to 60° relative to the circumferential direction of the tire. Additionally, the carbon fiber cords may have a TOW in the range of 6,000 to 12,000. In forming the bead reinforcing ply, the carbon fiber cords may have an end count of in the range of 10 to 30 ends per inch.

In one aspect of the invention, the bead reinforcing ply has a radially outer terminal point. The bead reinforcing ply radially outer terminal point is radially inward of the radially outer terminal point of the bead apex. Preferably, the radially outer terminal point of the bead reinforcing ply is approximately 80 to 95% of the radial height H_{A} of the bead apex radially outer terminal point.

In different aspects of the invention, the bead reinforcing ply may be located in a variety of positions in the single bead portion. The ply may be located adjacent to the carcass reinforcing ply turnup portion, adjacent to the carcass reinforcing ply main portion, or directly adjacent to the bead apex.

In another aspect of the invention, the turnup portion of the carcass reinforcing ply in the same tire half as the bead portion having the bead reinforcing ply therein terminates at a radial height, relative to a bead base line of the tire, outward of the terminal end of the turnup portion in the opposing tread half, increasing the asymmetry of the tire construction.

In another aspect of the tire, at least one of the terminal points of the turnup portion of carcass reinforcing ply terminates at a distance HT from the maximum section width of the tire. The distance HT is in the range of 0 to 20% of the section height SH of the tire.

In another aspect of the invention, the carcass may comprise two carcass reinforcing plies. In such a tire, the terminal ends of both carcass reinforcing plies in the same tire half as the bead portion having the bead reinforcing ply therein terminate at a radial height, relative to a bead base line of the tire, outward of the terminal ends of the turnup portions in the opposing tread half.

In another aspect of the invention, the asymmetric internal construction of the tire is paired with an asymmetrical tread. For such a tire and tread combination, the tread has a plurality of transverse and circumferential grooves and one circumferentially extending tread half, due to the configuration of the transverse and circumferential grooves, has a greater stiffness in at least the circumferential direction of the tire than the opposing tread half. Preferably, the stiffer tread half is located in the same tire half as the bead portion having the bead reinforcing ply therein.

In another aspect of the combination of the asymmetric internal tire construction and asymmetrical tire tread, the tread half having a greater stiffness in at least the circumferential direction of the tire has a circumferentially continuous rib while the tread rows in the opposing tread half all have transverse grooves.

In another aspect of the invention, the tire tread may be formed of multiple rubber compounds. In such a tire, at least a portion of the tread compound in the same tire half as the bead portion having the bead reinforcing ply therein has a greater hardness property than the tread compounds located in the opposing tread half.

### Definitions

The following definitions are applicable to the present disclosure and are used consistently as defined below:
"Apex" means an elastomeric filler located radially above the bead core and between the plies and the turnup ply;
"Axial" and "axially" are used herein to refer to lines or directions that are parallel to the axis of rotation of the tire;
"Bead" or "Bead Region" means that part of the tire comprising an annular tensile member wrapped by ply cords and shaped, with or without other reinforcement elements such as flippers, chippers, apexes, toe guards and chafers, to fit the design rim;
"Bead base" means the portion of the bead that forms its inside diameter;
"Bead base line (BL)" means an imaginary line, perpendicular to the equatorial plane of the tire, from the intersection of the radially extending outerside of the bead portion and the bead base;
"Bead core" means an annular hoop reinforcement in the bead region of the tire, commonly formed of steel wire, cords or cables;
"Circumferential" means lines or directions extending along the perimeter of the surface of the annular tire parallel to the Equatorial Plane (EP) and perpendicular to the axial direction;
"Design rim" means a rim having a specified configuration and width. For the purposes of this specification, the design rim and design rim widths are as specified by the industry standards in effect in the location in which the tire is made. For example, in the United States, the design rims are as specified by the Tire and Rim Association (TRA). In Europe, the rims are as specified in the European Tyre and Rim Technical Organization (ETRTO)- Standards Manual and the term design rim means the same as the standard measurement rims. In Japan, the standard organization is The Japan Automobile Tire Manufacturer's Association (JATMA);
"Equatorial plane (EP)" means the plane perpendicular to the tire's axis of rotation and passing through the center of its tread;
"Groove" means an elongated void area in a tread that may extend circumferentially or laterally about the tread in a straight, curved, or zigzag manner. Circumferentially and laterally extending grooves may be sub classified as a "sipe", "narrow," or "main." A "sipe" is a groove having a width in the range from about 0.2% to 0.8% of the compensated tread width, whereas a "narrow groove" has a width in the range from about 0.8% to 3% of the compensated tread width and a "main groove" has a width greater than 3% thereof. The "groove width" is equal to tread surface area occupied by a groove or groove portion, the width of which is in question, divided by the length of such groove or groove portion; thus, the groove width is its average width over its length;
"Maximum Sectional Width (SW)" is the maximum axial width of the tire as measured from one sidewall to the opposing sidewall;
"Radial" and "radially" are used to mean directions radially toward or away from the axis of rotation of the tire; and
"Tire Sectional Height (SH)" is the maximum radial height of the tire as measured from the bead base line BL.

### Brief Description of the Drawings

The invention will be described by way of example and with reference to the accompanying drawings in which:
FIG. 1 is one embodiment of the present invention;
FIG. 2 is an alternative embodiment of the present invention;
FIG. 3 is an alternative embodiment of the present invention;
FIG. 3A is an alternative bead construction for the tire of FIG. 3; and
FIG. 4 illustrates the tire tread.

### Detailed Description of the Invention

The following language is of the best presently contemplated mode or modes of carrying out the invention. This description is made for the purpose of illustrating the general principles of the invention and should not be taken in a limiting sense. The scope of the invention is best determined by reference to the appended claims.

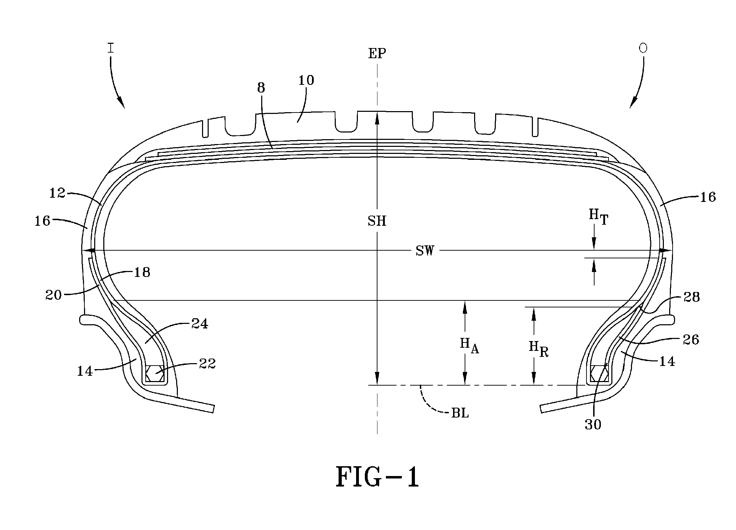

FIG. 1 illustrates a pneumatic tire in accordance with the present invention. The pneumatic tire is a low aspect radial tire, preferably designed for use as a high performance tire. The pneumatic tire has a carcass, a belt structure 8 radially outward of the carcass, and a tread 10 radially outward of the belt structure 8. The belt structure 8 may be any of the type conventionally used for a passenger vehicle tire, and generally will include two reinforcement plies of cords with overlay plies covering at least the axially outer edges of the individual belt reinforcement plies.

The carcass has at least one carcass reinforcing ply 12, a pair of opposing bead portions 14 and a pair of opposing sidewalls 16. The tire of FIG. 1 is illustrated as having one carcass reinforcing ply 12, but it is within the skill of those in the art to form the tire of FIG. 1 as a two ply carcass. The ply 12 has a main portion 18 extending through the opposing sidewalls 16 and two turnup portions 20 initiating in the bead portions 14. Each turnup portion 20 of the carcass reinforcing ply 12 extends from the main portion 18 of the carcass reinforcing ply 12, and is wrapped about a bead core 22 and a bead apex 24 in the bead portion 20; thus enveloping, at a minimum, the bead core 22 and the lower portion of the bead apex 24 in each bead portion 14. The turnup portion 20 in this embodiment terminates at a distance H_{T} radially above or below the maximum section width SW of the tire; the distance H_{T} is in the range of 0 to 20% of the section height SH.

In the opposing bead portions 14, the bead apexes 24 have the same radial height H_{A}, as measured from the bead base line BL. Located in only one bead portion 14 of the tire is a bead reinforcing ply 26. The bead reinforcing ply 26 is formed of calendered carbon fiber cords. The carbon fiber cords are inclined at an angle of 30° - 60°, preferably 40° - 50°, most preferably 45°, relative to the circumferential direction of the tire. Conventional chipper plies are formed of textile cords; herein carbon fiber cords provide a similar lightweight material, but have a tensile strength and breaking load strength greater than conventional textile materials.

The carbon fiber forming the carbon fiber cords in the bead reinforcing ply 26 have a denier in the range of 667 dTex to 16,000 dTex, with a preferred denier in the range of 4000 to 8000 dTex. The TOW range of the cords is 1,000 to 24,000, with a preferred range of 6,000 to 12,000. The cord has a Young's modulus of 30,000 - 90,000 Kpsi, with a preferred range of 30,000-40,000. The cord may have a tensile strength in the range of 400000 to 1000000 psi, preferably 600000 to 740000 psi. Additionally, the cord has a maximum elongation in the range of 1.0 to 3.0%, preferably 1.6 to 1.8%.

In forming the bead reinforcing ply 26, the end count of the carbon fiber cords, commonly referred to as ends per inch (e.p.i), is dependent upon the cord TOW. As the TOW increases, the e.p.i decreases. For the TOW range of 1000 to 24000, the e.p.i. ranges from 10 to 30 e.p.i. For TOW ranges of not more than 6000, the e.p.i. is in the range of 30 to 20, with a preferred range of 27 to 21. For TOW ranges of greater than 6000, the e.p.i. is in the range of 10 to 20, with a preferred range of 12 to 19. For three commercially available carbon fiber TOWs, the preferred e.p.i. ranges are: TOW of 6,000: 21 to 25 e.p.i.; TOW of 12,000: 15 to 20 e.p.i.; TOW of 15,000: 12 to 16 e.p.i.

In one embodiment of the invention, as illustrated, the bead reinforcing ply 26 is located within the turnup envelope and directly adjacent to the bead apex 24. The bead reinforcing ply 26 extends from the an initial point near the bead core 22 to a radially outer terminal end 28 at a radial height H_{R}, the height H_{R} being less than the radial height H_{A} of the bead apex 24; preferably the bead reinforcing ply radial height H_{R} is approximately 80 to 95% of the bead apex radial height H_{A}. The radially inner initial point 30 of the bead reinforcing ply 26 does not have any overlap with the bead core 22, but is preferably spaced from the radially outer surface of the bead core 22 by a distance of at least 1.5 mm; preventing the end of the bead reinforcing ply 26 from being pinched between the bead core 22 and the carcass reinforcing ply 12.

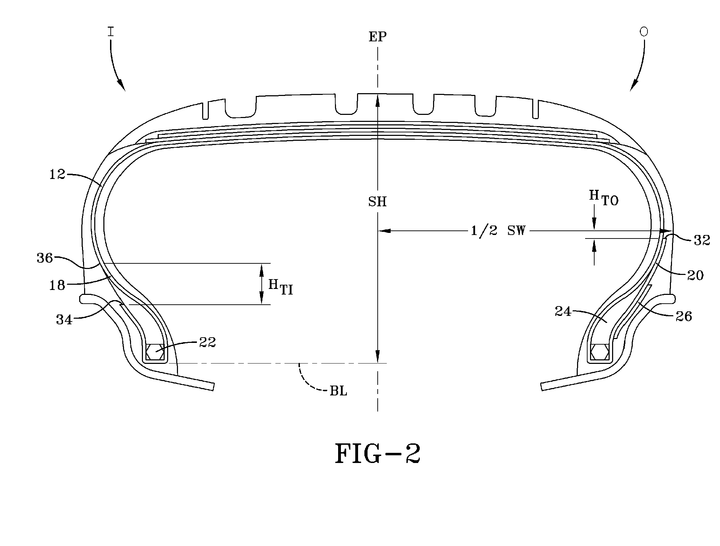

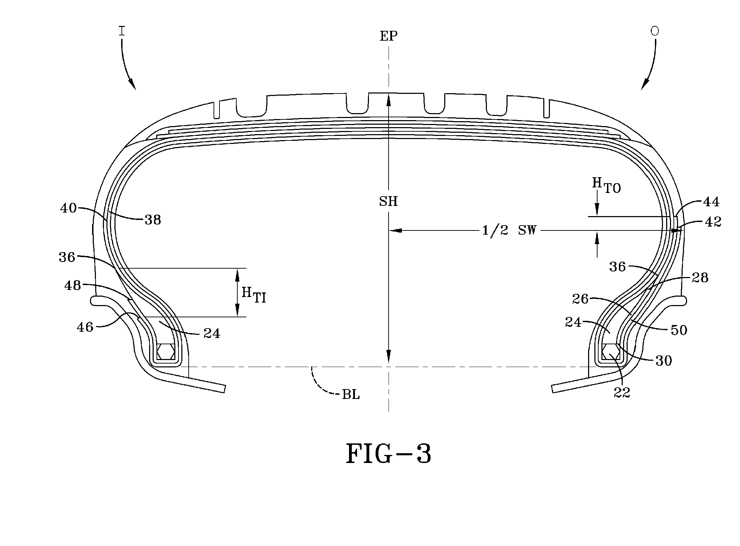

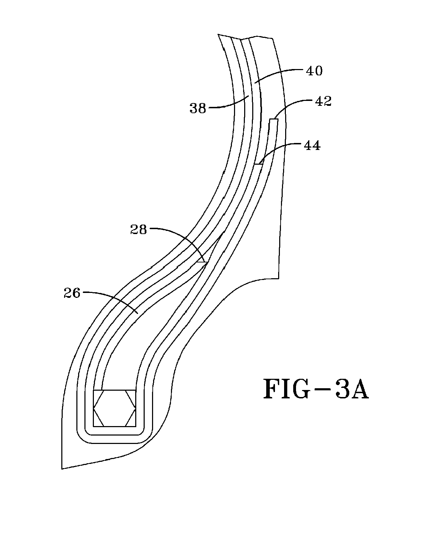

In alternative constructions, the bead reinforcing ply 26 may be located a) on the axially inner side of the bead apex 24 between the bead apex 24 and the carcass ply main portion 18 (see FIG. 3A), b) on the axially outer side of the carcass turnup portion 20 (see FIG. 2), or c) on the axially inner side of the carcass main portion 18 between the carcass ply 18 and a tire innerliner. The last construction is not illustrated herein, but constructing such a variation within the above limitations is within the skill of those in the art.

As the tire of the present invention is reinforced in only one bead portion 14, creating one bead portion 14 that is stiffer than the opposing bead portion 14, there is a preferential way of mounting the tire to take advantage of the asymmetrical nature of the tire. The tire preferably is mounted on a vehicle so the stiffer bead portion 14 is the outboard side O facing outwards from the vehicle with the opposing inboard side I facing the vehicle. The softer inboard sidewall and bead portion provides improved ride comfort, while the stiffer outboard sidewall and bead portion provides improved handling.

FIG. 2 is an alternative embodiment of the internal construction of the tire. The carcass has a single reinforcing ply 12; however, the terminal ends 32, 34 of the ply 12 are asymmetrical relative to the tire equatorial plane. The carcass ply terminal end 32 in the outboard side O of the tire is radially outward of the carcass ply terminal end 34 in the inboard side I of the tire. This results in an increase in the spring rate of the inboard tire side and the ride comfort of the tire. The carcass ply terminal end 32 in the outboard side O of the tire is located at distance H_{TO} of 0 to 20% of the tire section height SH from the maximum section width SW. The carcass ply terminal end in the inboard side I of the tire is distanced from the radially outer terminal end 36 of the bead apex 24 by a distance H_{TI} at least 5%, preferably about 10-15% of the tire section height SH.

Similar to the first embodiment, the bead reinforcing ply 26 may be located in a variety of locations in the outboard side bead portion 14 in addition to the illustrated location of being axially outward of the carcass reinforcing ply turnup portion 20. The bead reinforcing ply 26 may be between the apex 24 and the carcass reinforcing ply turnup portion 20 (see FIG. 1), between the apex 24 and the carcass reinforcing ply main portion 18 (see FIG. 3A), or between the carcass reinforcing ply main portion 18 and a tire innerliner. FIG. 3 is an alternative embodiment of the internal construction of the tire. The carcass has two carcass reinforcing plies 38, 40, with each reinforcing ply having a main portion and a pair of turnup portions. In the outboard side O of the tire, the two plies 38, 40 terminate within the distance H_{T} radially above or below the maximum section width SW of the tire; the distance H_{T} being in the range of 0 to 20% of the tire section height SH. The terminal end 42 of the inner ply 38 may be radially inward of the terminal end 44 of the outer ply 40. Alternatively, the terminal end 42 of the inner ply 38 may be radially outward of the terminal end 44 of the outer ply 38 as seen in FIG. 3A, thereby completely enveloping all of the other ply endings 28, 44 and the apex 24.

In accordance with the invention, a bead reinforcing ply 28 is located in only one bead portion 14 of the tire. Preferably, the bead reinforcing ply 26 is located between the bead apex 24 and the turnup portion 50 of the outer carcass ply 40, having a radially outer terminal end 28 at a height HR. Similar to the previous embodiments, the bead reinforcing ply 26 may be located in various locations of the bead portion 14, with the requirement that the lower terminal end 30 of the bead reinforcing ply 26 being radially outward of the bead core 22 and the radially outer end 28 of the bead reinforcing ply 26 being radially inward of the radially outer end 36 of the bead apex 24.

In the inboard tire side I, both terminal ends 46, 48 of the plies 38, 40 are radially inward of the radially outer terminal end 36 of the bead apex 24. The terminal ends 46, 48 of the plies 38, 40 are spaced by a distance H_{TI} of at least 5% of the tire section height SH below the radially outer terminal end 36 of the bead apex 24. The inner ply terminal end 46 in the inboard tire side I may be radially inward of the outer ply terminal end 48, as illustrated in FIG. 3, or may be radially outward of the outer ply terminal end 48, similar to that illustrated in FIG. 3A.

In the inventive tire, regardless of specific embodiment, while the carcass turnup portions and the ply reinforcing in each bead portion 14 is asymmetrical, the bead apexes 24 in both bead portions 14 are identical in construction, with both apexes 24 having the same radial height. The embodiment of FIG. 3 results in the inboard side of the tire having a greater spring rate than the outboard side of the tire.

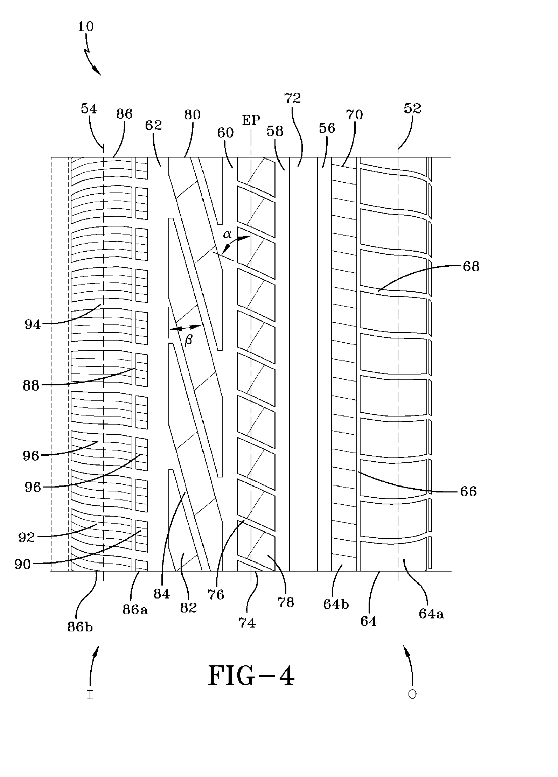

Just as with the internal construction of the tire, the tread 10 of the tire may also be asymmetrical, see FIG. 4. The tread is similar to the tread disclosed in US-B- D524,236.

The tread 10 is located between a pair of tread edges 52, 54. There are four main circumferentially extending grooves 56, 58, 60, 62. Between the first tread edge 52 and the first main groove 56 is a shoulder tread row 64. The shoulder tread row is effectively divided into two regions 64a, 64b by a narrow groove 66. The axially outer region 64a, relative to the tire equatorial plane EP, is subdivided into tread elements by a narrow width laterally extending groove 68, the regions thereby responding like tread blocks; the axially inner region 64b is subdivided by sipes 70, the region thereby responding like a tread rib.

Adjacent to the shoulder tread row 63 is a tread rib 72. The rib 72 is illustrated as having no siping or grooving, thus forming a stiff tread element. In an alternative, the rib may have limited siping or narrow grooving to provide greater flexibility to the tread rib 72.

Located on the equatorial plane EP, but not necessarily centered on the equatorial plane EP, is another tread row 74. The tread row 74 has a plurality of transverse, inclined grooves 76, forming a plurality of tread blocks 78. The grooves 76 are inclined at an angle α in the range of 85° to 65° relative to the equatorial plane EP.

Adjacent to the central tread row 74 is a tread row 80 of elongated tread blocks 82 separated by steeply inclined transverse grooves 84. The tread blocks 82 have a very long footprint pattern determined by the width of the tread row 80 and the inclination angle β of the grooves 84. The inclination angle β is in the range of 10° to 25° with one of the adjacent circumferential grooves 60, 62. The blocks 82 preferably have a circumferential length, measured between the farthest opposing corners of the block, in the range of 85-400% of the normal pressure footprint length of the tire. More details regarding this tread block configuration are provided in US-A- 2005-0173035.

On the tread edge 54 is another shoulder tread row 86 divided into two regions 86a, 86b by a narrow groove 88. Both portions 86a, 86b are subdivided into individual tread elements 90, 92 by transverse grooves 94. The individual tread elements are each illustrated as having a plurality of sipes 96. By providing a plurality of transverse grooves 94 and sipes 96, the shoulder tread row 86 has a tread stiffness less than the opposing tread shoulder row 64.

As evident from the tread illustration, the tread design is asymmetrical. The selective combination of ribs, grooves, and sipes, the stiffness of the tread varies across the width of the tread. With the presence of the continuous rib 72 and the minimally siped and groove shoulder tread row 64, the tread half illustrated in the right side of FIG. 4 has a greater tread stiffness, in at least the circumferential direction of the tire, than the opposing tread half. As the goal of the present invention is to create an asymmetric tire wherein the outboard tire side O, when mounted, has a greater stiffness than the inboard side, it is preferred that the stiffer tread portion be on the outboard side of the tire, as indicated by the I and O indications in FIG. 4.

The tread stiffness may also be affected by variations in the tread rubber compound selected for the tire. If it is desired to increase, or enhance the stiffness of the outboard O tread half, the tread rubber, or even just a tread base rubber, may be selected to have a greater hardness or stiffness characteristic than the inboard I tread half. If it is desired to equalize the tread half stiffness, the inboard I tread half may be the tread portion provided with a tread rubber or tread base rubber with a greater hardness or stiffness characteristic than the outboard O tread half.

Combining the asymmetric internal construction and an asymmetric tread construction results in a tire well suited to handle the camber effects of a vehicle and provide a tire that has improved ride comfort and handling.

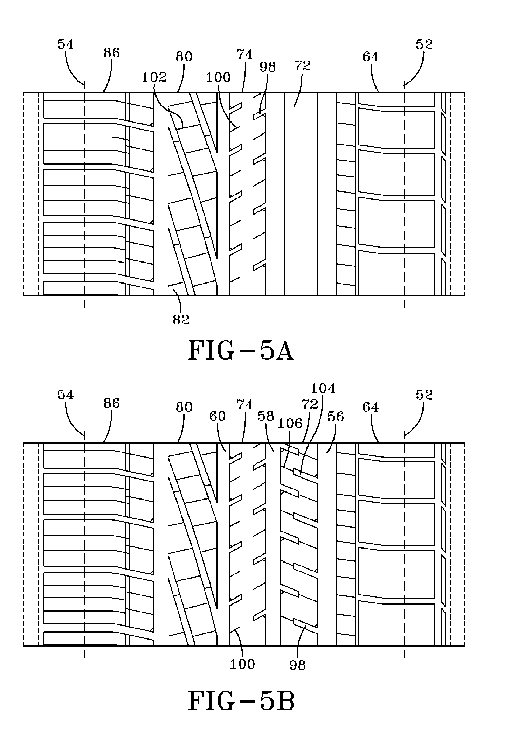

The tire characteristics of improved ride comfort and handling can also be achieved with the alternative treads of FIGS 5A and 5B. In the tread of FIG. 5A, the tread row 74 is a continuous rib, provided with a plurality of blind transverse grooves 98 and blind sipes 100. The grooves 98 and sipes 100 are inclined in the same direction. The grooves and sipes initiate from each side of the rib, alternating in the circumferential direction of the tire. Preferably, each groove 98 initiating in one rib side is aligned along the same inclination angle with a sipe 100 initiating in the opposing rib side. The blocks 82 in the tread row 80 are provided with additional sipes 102 than those of the tread of FIG. 4.

In the tread of FIG. 5B, the tread rib 72 is also provided with short inclined transverse grooves 104 that do not completely subdivide the rib 72. The grooves 104 have an axial extent across the rib of 25 to 75% of the rib width. The rib 72 also has a plurality of sipes 106. The grooves 104 and sipes 106 initiate from each side of the rib, preferably alternating in the circumferential direction of the tire. Preferably, as illustrated, each groove 104 on one side of the rib connects with a sipe 106 initiating from the opposing rib side. This groove/sipe connection further reduces the rigidity of the rib 72, but does not render the tread row rigidity as low as that of a row of tread blocks.

The inclination angle of the grooves 104 and sipes 106 in the rib 72, relative to the adjacent grooves 56 or 58, is the same, but opposite direction, as the inclination angle of the grooves 98 and sipes 100 in the adjacent tread row 74. To vary the tread characteristics, the inclination angles may be in the same direction or at different angles.

## Claims

1. A pneumatic radial tire having two tire halves, one on each side of a circumferentially extending equatorial plane (EP) of the tire, the tire comprising a carcass and a tread (10) radially outward of the carcass, the carcass comprising at least one carcass reinforcing ply (12), opposing bead portions (14), and opposing sidewalls (16), the carcass reinforcing ply (12) having a main portion (18) extending between the opposing bead portions (14) and a pair of turnup portions (20), each turnup portion (20) extending from one end of the main portion (18), each bead portion (14) having a bead core (22) and a bead apex (24) radially outward of each bead core (22), the bead apex (24) being located between the main portion (18) and one turnup portion (20) of the at least one reinforcing ply (12), the tire having a sectional height (H) measured from a bead base line (BL) to a surface of the tread (10) at the tire equatorial plane (EP), the tire **characterized by** a bead reinforcing ply (26) located in only one bead portion (14) of the tire, the bead reinforcing ply (26) being adjacent to the at least one carcass reinforcing ply (12).

2. The tire of claim 1 wherein the bead reinforcing ply (26) comprises carbon fiber reinforced cords.

3. The tire of claim 1 or 2 wherein the bead apexes (24) in each bead portion (14) have the same radial height (HA), as measured from a bead base line (BL).

4. The tire of at least one of the previous claims wherein the bead reinforcing ply (26) is located adjacent to the carcass reinforcing ply turnup portion (20), adjacent to the carcass reinforcing ply main portion (18), or directly adjacent to the bead apex (24).

5. The tire of at least one of the previous claims wherein the turnup portion (20) of the at least one carcass reinforcing ply (12) in the same tire half as the bead portion having the bead reinforcing ply (26) therein terminates at a radial height, relative to a bead base line (BL) of the tire, outward of the terminal end of the turnup portion (20) in the opposing tread half.

6. The tire of at least one of the previous claims wherein at least one of the terminal points of the turnup portion (20) of the at least one carcass reinforcing ply (12) terminates at a distance (HT) from the maximum section width (SW) of the tire, the distance being in the range of 0 to 20%, alternately 3% to 15%, of the section height (SH) of the tire, the section height being measured from the bead base line (BL) to the surface of the tread (10) at the tire equatorial plane (EP).

7. The tire of at least one of the previous claims wherein the carcass comprises two carcass reinforcing plies (36, 38), and, optionally, wherein the terminal ends of both carcass reinforcing plies (36, 38) in the same tire half as the bead portion (14) having the bead reinforcing ply (26) therein terminate at a radial height, relative to the bead base line (BL) of the tire, outward of the terminal ends of the turnup portions (10) in the opposing tread half.

8. The tire of at least one of the previous claims wherein the bead reinforcing ply (26) has a radially outer terminal point, the bead reinforcing ply radially outer terminal point being radially inward of the radially outer terminal point of the bead apex (24), and, optionally, wherein the radially outer terminal point of the bead reinforcing ply (26) is at a radial height (H_{R}), the radial height (H_{R}) of the bead reinforcing ply radially outer terminal point being 80 to 95% of the radial height (H_{A}) of the bead apex radially outer terminal point.

9. The tire of at least one of the previous claims wherein:
(A) the tread (10) has a plurality of transverse and circumferential grooves and a pair of adjacent tread halves, one of each side of the equatorial plane (EP), wherein one tread half, due to the configuration of the transverse and circumferential grooves, has a greater stiffness in at least the circumferential direction of the tire than the opposing tread half, the stiffer tread half being located in the same tire half as the bead portion (14) having the bead reinforcing ply therein (26); or
(B) wherein the tread is formed of multiple rubber compounds and at least a portion of the tread compound in the same tire half as the bead portion having the bead reinforcing ply (26) therein has a greater hardness property than the tread compounds located in the opposing tread half.

10. The tire of at least one of the previous claims, wherein a tread half having a greater stiffness in at least the circumferential direction of the tire comprises a circumferentially continuous rib and the tread rows in the opposing tread half all have transverse grooves, and, optionally, wherein the tread row in the opposing tread half comprises a tread row having transverse grooves inclined at an angle of 10° to 25° relative to an adjacent circumferential groove.
